# EUROPEAN PATENT APPLICATION

(11) **EP 3 437 456 A1**
(43) Date of publication of application: **06.02.2019**
(21) Application number: 17425086.0
(22) Date of filing: 03.08.2017
(51) Int. Cl.: A01D 89/00, A01D 84/00

(54) **RAKE UNIT**

(71) Applicant: I.G. S.R.L., 48026 Russi (RA) (IT)
(72) Inventor: Ravaglia, Paolo, 48012 Bagnacavallo RA (IT)
(74) Representative: Modiano, Micaela Nadia

(57) **Abstract**

A rake unit, for the movement and conveyance of agricultural products such as grass, hay, forage, wheat, corn and the like, cut and spread on the ground, comprising a framework (2) which can be coupled to a drive unit, for its movement along an advancement direction (A); the framework (2) is associated with elements (3) which can move cyclically for lifting and delivering the agricultural products to at least one conveyor belt (4), which faces and is proximate to the elements (3), for the movement of the agricultural products along an operating direction (B) that is defined by the belt (4) and for their conveyance in a corresponding discharge area; the unit further comprises cyclically movable auxiliary means (6) for the movement of the agricultural products, chosen of the type of the elements (3), which are associated with the framework (2) and, in at least part of their cyclic movement, face in an upper region and are proximate to the border region (C) between the elements (3) and the belt (4), in order to facilitate the delivery of the agricultural products to the belt (4).

## Description

The present invention relates to a rake unit, i.e., to an agricultural machine designed to move and convey agricultural products, in order to form swaths.

As is known, in the agricultural field periodically there is the need to gather products such as grass or other previously cut or mowed plants (hay or corn, for example) so as to be able to have them available for subsequent treatments or uses.

Preliminarily, therefore, the agricultural ground of interest is crossed by machines such as mowers or the like, which cut the plants, leaving the products thus cut distributed randomly on the ground.

Therefore, before actual gathering, which is performed by round balers, self-propelled shredders (also known by the English term "forage harvester") or similar apparatuses, various types of machine are used which are in any case assigned to forming the swath, among them, the one termed "rake" is known.

The task of the rake is to gather the agricultural products along ordered rows up to two meters wide, which are indeed known as "swaths".

By virtue of the preliminary work of the rake, the machines that work subsequently can just follow the path traced by the swaths, thus gathering far more rapidly the entire mass of agricultural products spread on the ground, to then compact them in bales or in any case assign them to subsequent treatments.

According to an embodiment that is by now adopted extensively, the rake is provided with a gathering apparatus provided with a plurality of teeth, which by following a closed path which is parallel to the advancement direction lift from the ground the agricultural products and push them behind them, onto one or two conveyor belts, which move transversely to the advancement direction.

While the machine advances, therefore, the belts receive the agricultural products from the gathering apparatus and discharge them to the side of one of their ends (or deliver them to the adjacent belt), in any case generating progressively the desired swaths, which form parallel to the advancement direction, with a width that is variable as a function of the speed and quantity of the product.

However, according to this machine architecture, in the intermediate region in which the teeth release the products, entrusting them to the belt, the normal flow of material (the grass or other product conveyed toward the ends of the belts) is subjected to a series of unwelcome effects, which generate several drawbacks.

In this region, in fact, first of all the cut agricultural products undergo a sudden ninety-degree redirection, which (as in the motion of any fluid) often generates anomalies which produce an irregular swath downstream.

The situation worsens in those far from infrequent cases in which the thrust of the teeth is not sufficient to deliver the grass to the belts and the grass temporarily remains in the intermediate region, waiting for other incoming grass to push it downstream. In this case, however, the irregular advancement increases the risk of unwanted accumulations, which condition the shape of the swath.

The drawbacks indicated above are even more frequent and significant when the products to be gathered are humid and therefore heavier and more generally one can say that rakes of the known type often tend to create a less-than-perfect swath, especially for humid and short products, which have more difficulty in passing beyond the critical region.

However, it should be noted that there is also another cause of the forming of unwanted accumulations, which affects in particular long products.

These products in fact undergo a preferential orientation that is produced by the mowers which, during the cutting step, bend them against the ground (under the action of the protective housings, which must be close to the ground in order to protect people from any separations of the blades, which travel at very high speeds).

In this orientation, the blades of grass are aligned along the advancement direction of the rake and tend to enter easily between the tooth that lifts them and the spacer straps that are normally arranged between adjacent teeth. Therefore, during the ascent, the blade of grass sometimes remains locked, being unable to continue the stroke only when it is pushed by other blades that are gathered subsequently, again however compromising the regularity of the swath.

All the events described above constitute highly unwelcome drawbacks, since the irregular swath creates problems to round balers (or in any case to the machines subsequently called to work).

The agricultural products (normally gathered to be stored in a silo) must in fact be processed by machines provided with cutting systems, which absorb a considerable amount of power.

In this context, the irregular swath overloads the transmissions and forces the operator to adapt continuously the advancement speed to the shape of the swath. Furthermore, the irregular swath can cause problems also if one wishes to dry the products, since the regions of greatest accumulation dry late, so that the bale thus formed is not internally uniform, facilitating the birth of mold during storage.

The aim of the present invention is to solve the problems described above, providing a unit that allows to obtain swaths having a regular shape, reducing or eliminating the presence of unwanted accumulations on the ground.

Within this aim, an object of the invention is to provide a unit that ensures the forming of regular swaths, reducing or avoiding the risk of tangles and/or clogging.

Another object of the invention is to provide a rake unit that offers practical adjustment methods in order to optimize the release step.

Another object of the invention is to provide a rake unit that allows effective treatment of the agricultural products without damaging them or slowing them down during movement.

Another object of the invention is to provide a rake unit that ensures high reliability in operation.

Another object of the invention is to propose a rake unit that adopts a technical and structural architecture that is alternative to those of rake units of the known type.

Another object of the invention is to provide a rake unit that can be obtained easily starting from commonly commercially available elements and materials.

Another object of the invention is to provide a rake unit that has modest costs and is safe in application.

This aim and these and other objects which will become better apparent hereinafter are achieved by a rake unit according to claim 1.

Further characteristics and advantages of the invention will become better apparent from the description of a preferred but not exclusive embodiment of the rake unit according to the invention, illustrated by way of nonlimiting example in the accompanying drawings, wherein:

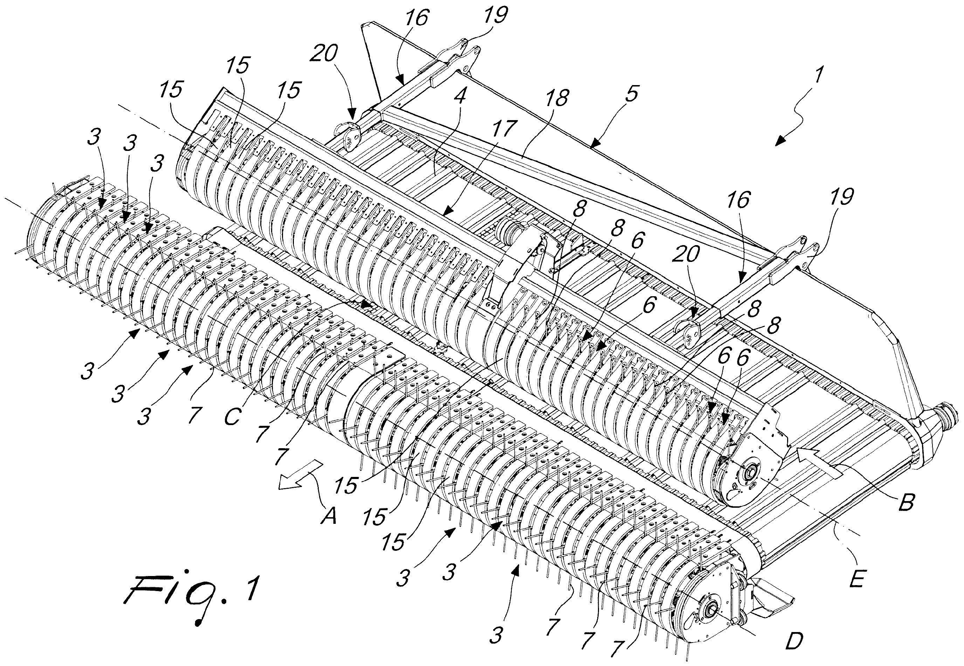

Figure 1 is an elevated right front perspective view, with respect to the advancement direction, of the rake unit according to the invention;
Figure 2 is an elevated left front perspective view, with respect to the advancement direction, of the rake unit of Figure 1 and without some elements in order to illustrate some internal components;
Figure 3 is a highly enlarged-scale view of a detail of Figure 2;

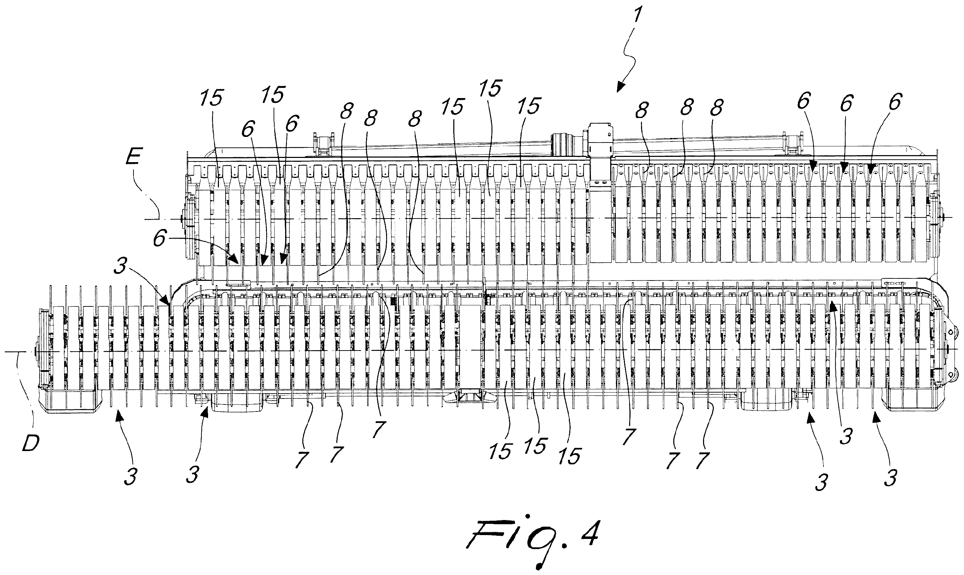

Figure 4 is a front view of the rake unit of Figure 1;

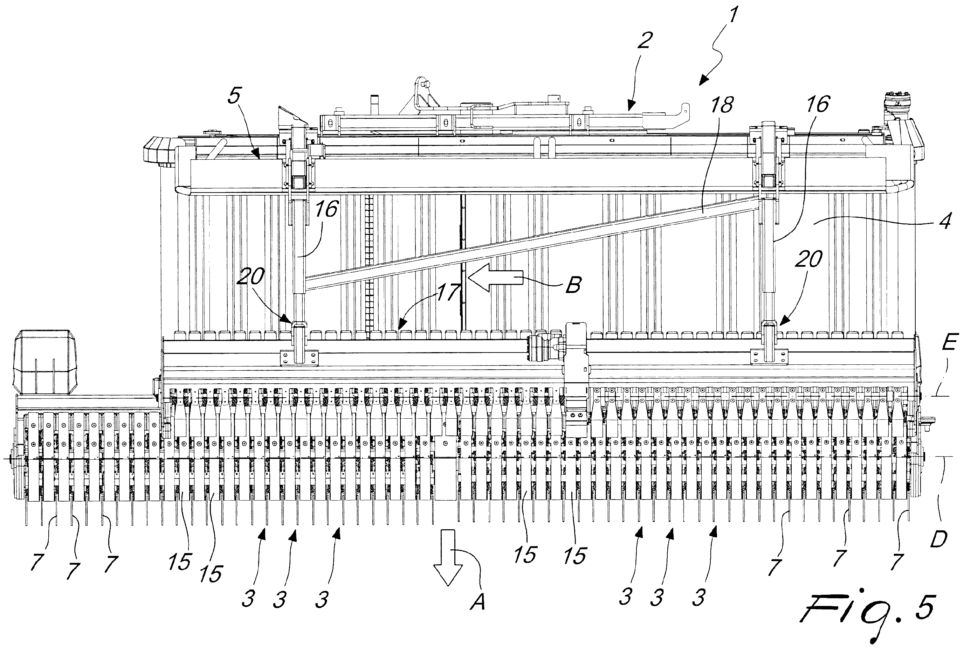

Figure 5 is a plan view of the rake unit of Figure 1;
Figure 6 is a lateral elevation view of the rake unit of Figure 1;

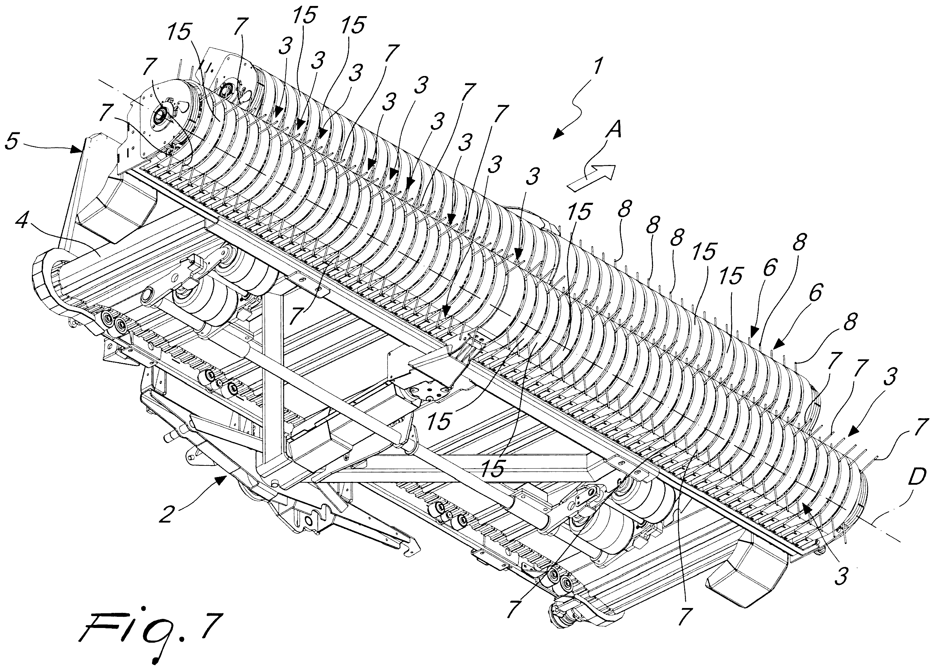

Figure 7 is a lower right front perspective view, with respect to the advancement direction, of the rake unit of Figure 1.

With particular reference to the figures, the reference numeral 1 generally designates a rake unit, designed for the movement and conveyance of agricultural products, such as grass, hay, forage, wheat, corn and the like, (previously) cut and spread on the ground (typically on agricultural land).

In the continuation, for the sake of simplicity sometimes specific reference will be made to the movement and conveyance of grass on the part of the unit 1, but the concepts expressed in such cases should be understood to be extended also to other types of agricultural products, such as the ones mentioned above or yet others.

According, therefore, to the methods that will be described hereinafter, the unit 1 is designed to transfer and convey the agricultural products cut beforehand by amassing them along ordered rows (known indeed as "swaths").

The resulting ordered distribution in fact allows quicker and easier gathering of the grass on the part of other agricultural machines as a function of the specific requirements and of the treatments for which it is intended.

In this regard, it should be noted for example that it is possible to subsequently send on the agricultural land round balers, forage harvesters or similar machines for gathering the grass and subsequently forming bales or silage, for use in the zootechnical field, as feed for animals.

The unit 1 therefore comprises a framework 2 which can be coupled to a drive unit, even according to known methods, to be moved along an advancement direction A, typically on an agricultural land of interest, on which the agricultural products with which the swaths are to be formed are indeed distributed randomly and indiscriminately.

It is pointed out that usually the framework 2 (as well as the unit 1 in general) is towed along the ground by a tractor or by a similar vehicle, on which the drive unit mentioned above is equipped and to which the framework 2 is coupled. It is not excluded, in any case, to mount the drive unit on board the unit 1 itself (appropriately modified), so as to motorize it independently.

The framework 2 is associated with elements 3 which can move cyclically for lifting and delivering the agricultural products to at least one conveyor belt 4, which faces and is proximate to the elements 3.

The belt 4 moves the agricultural products (received from the elements 3) along an operating direction B defined by the belt 4 (and substantially perpendicular to the advancement direction A), conveying them into a corresponding discharge area.

In the accompanying figures, the operating direction B is associated with a specific orientation, but the unit 1 according to the present description and the protection claimed herein can equally provide for belts 4 which operate with the opposite orientation (or belts 4 with the possibility to operate equally in both orientations).

In any case, therefore, while it advances along the agricultural land, the unit 1 gathers grass, hay, corn or other agricultural products spread on the ground (previously cut) with the elements 3, which lift them and transfer them behind them, depositing them on the belt 4, which moves them at right angles to the advancement direction A, until they are released into the discharge area laterally to one of its ends. Here, in a first configuration of the unit 1, the product falls back onto the ground, progressively forming the swath, which is parallel to the advancement direction A. It is specified that it is not excluded to produce and market units 1 in other configurations, in which they are provided with two (or more) belts 4, which are mutually aligned along a common operating direction B and are arranged so as to face and be proximate to respective elements 3.

In this case, the two belts 4 can operate with opposite orientations and be directed outward (so as to convey the agricultural products toward both sides of the advancing unit 1 and form two swaths) or toward the inside (in order to deposit at the center the agricultural products and form a single swath), or can operate with the same orientation, with one belt 4 delivering the products to the other, which in turn discharges them on the opposite side and obtains the forming of a single swath (in this case, the discharge area of the first belt 4 in practice coincides with a first flap of the second one).

In order to facilitate the correct movement of the agricultural products on the part of the belt 4, the unit 1 also comprises a containment barrier 5 for the agricultural products (for example of the type of a rigid screen or of a sheet of polymeric material). The barrier 5 is arranged along the side of the belt 4 that lies opposite the lifting and delivery elements 3.

According to the invention, the unit 1 comprises auxiliary means 6, chosen of the type of the elements 3, which can move cyclically for the movement of the agricultural products.

The means 6 are associated with the framework 2 and in at least part of their cyclic movement face upward and are proximate to the border region C between the elements 3 and the belt 4.

By indicating that the means 6 face and are proximate "upward" with respect to the border region C it is understood that in at least part of their cyclic movement they are arranged at a higher vertical level than the belt 4 and the elements 3 (having as reference the ground on which the unit 1 moves), substantially indeed above the border region C, or in any case in such a position as to be able to act in the region of space directly above the imaginary separation line or strip between the area in which the elements 3 move and the belt 4 (indeed the border region C).

This arrangement allows them to facilitate the delivery of the agricultural products to the belt 4, since they indeed operate at the area in which, in known solutions, the normal flow of material (agricultural products propelled toward the belt 4) encounters the greatest difficulties.

As shown, in fact, indeed in that border region C in known solutions the grass tends to remain longer than expected, reaching the belt 4 only when it is pushed by other incoming grass, but producing an irregular swath.

The means 6 indeed operate in this border region C and by engaging and propelling the agricultural products in transit make them proceed even when they would tend to stop, ensuring the regularity of the flow and of the swath being formed and the achievement of the intended aim and objects.

In particular, the elements 3 comprise at least one row of first teeth 7, which rotate along respective first closed trajectories, which are wound around a common first working axis D, which is parallel to the operating direction B.

In turn, the means 6, which as shown are chosen of the type of the elements 3, comprise at least one row of second teeth 8, of the type of the first teeth 7, which rotate along respective second closed trajectories, which are wound around a common second working axis E, which is parallel to the operating direction B and to the first axis D.

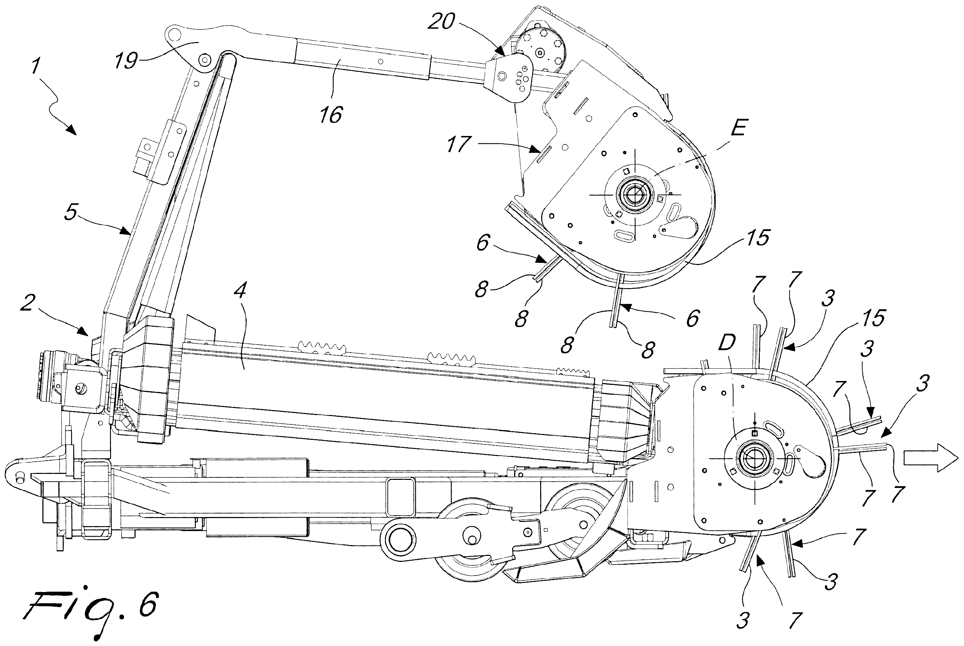

It is specified that both the first teeth 7 and the second teeth 8 follow the respective trajectories always with the same orientation: with respect to Figure 6, this orientation is counterclockwise for the first teeth 7 and clockwise for the second teeth 8.

More particularly, the elements 3 and/or the means 6 comprise a plurality of mutually parallel rows of teeth 7, 8.

Usefully, and as can be deduced also from the accompanying figures, each tooth 7, 8 is constituted by an at least partially flexible wire.

In one embodiment, mentioned by way of nonlimiting example of the application of the invention, the unit 1 comprises a first mechanism for moving the row (or rows) of first teeth 7 and a second mechanism for moving the row (or rows) of second teeth 8 along the respective trajectories.

Each mechanism in turn comprises at least one rotating shaft 9, which is arranged along the respective working axis D, E and is controlled by air motor, which is optionally common to the mechanisms (and optionally coincides with the motor of the drive unit that moves the entire unit 1).

It should be noted that all the first teeth 7 and the second teeth 8 can be associated with just two shafts 9, one indeed arranged along the first working axis D and one arranged along the second working axis E.

According to other constructive choices, which can be adopted as a function of the specific constructive requirements, two or more aligned shafts 9, to which respective rows of first teeth 7 (second teeth 8) are to refer, are arranged along the first working axis D (and/or along the second working axis E).

At least one respective supporting bar 10 for a corresponding row of teeth 7, 8 is then coupled to each shaft 9.

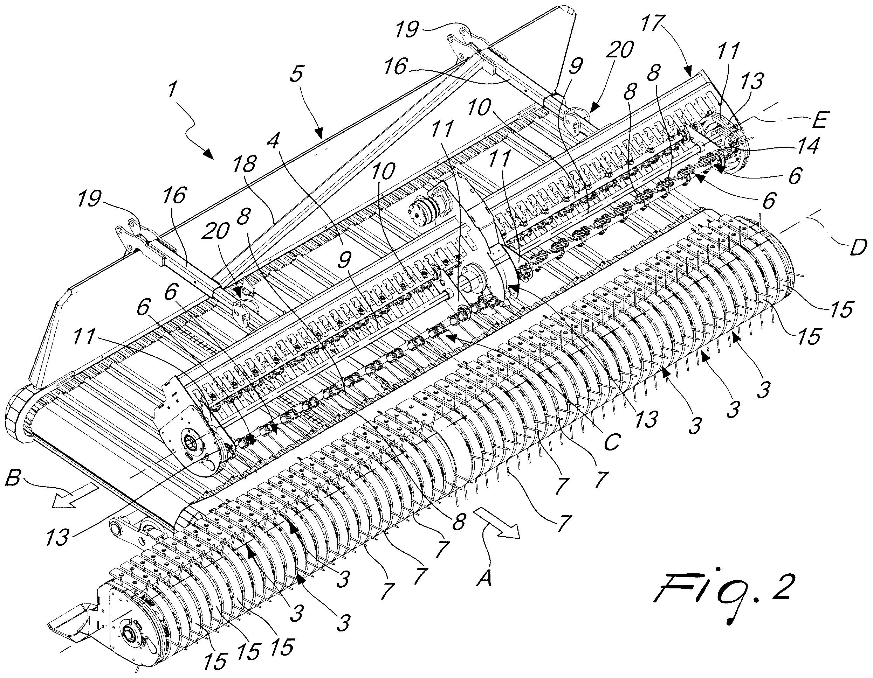

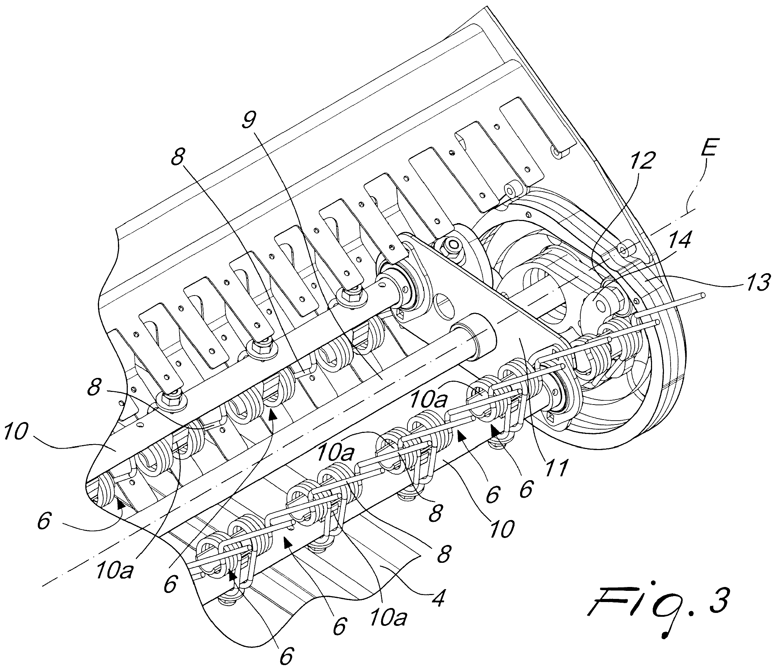

It should be noted that the shafts 9 and the bars 10 are visible substantially only in Figures 2 and 3 (where indeed for this purpose some components have been removed), in relation to the second mechanism, which is responsible for the motion of the second teeth 8.

Preferably, the configuration shown for the second mechanism is substantially identical to the one of the first mechanism, and in this context the person skilled in the art can easily intuit how the shafts 9 and the bars 10 of the first mechanism, which are responsible for the motion of the first teeth 7, are also arranged and cooperate, although in the accompanying figures they are not visible because they are hidden by other components.

More particularly, in the preferred (not exclusive) embodiment, at least one of the supporting bars 10 (and preferably all of them) is supported rotatably by an arm 11 which is mounted so as to be integral on the respective shaft 9, in order to maintain the possibility to rotate about its own longitudinal axis.

In practice, therefore, the bar 10 can rotate both about the respective working axis D, E and about its own longitudinal axis.

Furthermore, the bar 10 (or each bar 10) is also indirectly coupled to a roller 12 (Figure 3), which can slide along the profile of a contoured cam 13. For example, the coupling between the bar 10 and the roller 12 can be ensured by an additional member 14.

In the preferred embodiment, therefore, it is indeed the combination of the motions imparted by the shaft 9 and by the cam 13 that defines the respective trajectory. By shaping at will the cam 13 it is therefore possible to give the teeth 7, 8 any trajectory as a function of the specific requirements.

In any case it is not excluded to resort to different and possibly simpler mechanisms if one wishes the teeth 7, 8 to follow different and possibly less complex rules of motion.

As shown by the accompanying figures, in order to simplify the structure and reduce the number of components, the same arm 11 can be extended readily on opposite sides with respect to the shaft 9 in order to support two bars 10.

In the embodiment of the accompanying figures, which is a nonlimiting illustration of the application of the invention, each wire (each tooth 7, 8) is wound with one of its end portions around a supporting foot 10a (Figure 3), which is fixed rigidly to the respective bar 10.

Again, it is specified that although in the accompanying figures the components listed in the preceding paragraphs are visible only in relation to the second mechanism, the first mechanism also is preferably provided in a fully similar manner.

Usefully, a spacer strap 15 preferably made of polymeric material in order to reduce friction is interposed between each pair of adjacent teeth 7, 8.

Each strap 15 is partially wound around the respective working axis D, E, and the trajectories of the teeth 7, 8 cross the gaps between respective adjacent straps 15.

As can be deduced also from the accompanying figures, at least all the straps 15 that are interposed between the first teeth 7 are mutually identical, and so are all the straps 15 that are interposed between the second teeth 8 (which in any case have been removed in Figures 2 and 3 in order to allow to view the components that they otherwise hide). More particularly, preferably there is a substantial identity among all the straps 15 of the unit 1, be then associated with the first teeth 7 or with the second teeth 8.

Conveniently, each second trajectory comprises at least one first portion, which is directed toward the elements 3, in which the corresponding second tooth 8 protrudes from the profile of the straps 15. The first portion is therefore indeed the one that passes through the space that is adjacent to (overlying the) border region C: by protruding from the straps 15, each second tooth 8 can thus affect and move the agricultural products.

Furthermore, each second trajectory comprises at least one second portion, which is arranged downstream of the first portion with respect to the direction of travel of the second trajectories: each second tooth 8 therefore travels along said second portion after helping to push the grass (in the first portion). In said second portion the corresponding second tooth 8 is retracted within the profile of the straps 15 (in practice it disappears by retracting into the compartment delimited by the straps 15, wound around the respective working axis D, E).

This choice, which is made possible by appropriately shaping the cams 13 and in general the various elements of the second mechanism, which is responsible for the motion of the second teeth 8, is of extreme practical interest. One should in fact consider that the grass, after being pushed and released by the teeth 7, 8 (up to that point along the advancement direction A and in the opposite orientation) is pushed onto the grass that is already moving on the belt 4 along the operating direction B (therefore at right angles). In order to avoid causing speed reductions, at the end of the first portion and therefore after completing their function, the second teeth 8 therefore retract completely under the straps 15, indeed allowing the grass to be dragged by the grass that is already on the belt 4, avoiding interfering and indeed generating speed reductions.

Furthermore, in the transition from the first portion to the second portion each second tooth 8 retracts progressively within the profile of the straps 15, remaining substantially perpendicular to said profile (and therefore to the straps 15). This choice, which again can be obtained by means of an appropriate shape of the cams 13 and of the associated components, is highly useful: this in fact allows to minimize friction on the product and therefore to avoid damaging and retaining (for example) leaves and blades of grass.

In the embodiment proposed in the accompanying figures by way of nonlimiting example of the application of the invention, the unit 1 comprises a supporting frame for the means 6, which is associated even indirectly with the framework 2. Said frame comprises a pair of rods 16 which are coupled on the opposite side (with respect to the framework 2) to a shell 17 for the rotatable support of the respective shaft 9.

It is noted that between the two rods 16 the frame can also have at least one reinforcement crossmember 18.

Favorably, each rod 16 can be coupled rigidly to a component of the framework 2 (in the solution of the accompanying figures, in practice to the barrier 5) according to one selectively of a plurality of different orientations, which corresponds to different vertical heights (and optionally inclinations) of the means 6, with respect to the belt 4 and the elements 3.

This result can be obtained for example by pivoting a terminal flap of each rod 16 to a respective bracket 19, using hydraulic cylinders or traction elements which can be adjusted indeed to choose the desired configuration (and ensure its stability over time, until a new voluntary intervention on the part of the operator).

By virtue of this adjustment possibility it is possible to choose at will the height at which the second teeth 8 are kept with respect to the belt 4 and the first teeth 7, as a function of the specific requirements.

In order to give the invention further adjustment possibilities, the shell 17 also can be coupled rigidly to each rod 16 according to selectively one of a plurality of different orientations, which correspond to different inclinations of the means 6, with respect to the belt 4 and the elements 3. By virtue of this constructive choice, which for example can be obtained by means of a hinge connection 20 (which can be fixed in different mutual positions) between each rod 16 and the shell 17, it is possible to optimize the step for release of the product.

In order to further increase the possibilities of adjustment of the unit 1 and therefore the versatility of the invention, it should be noted moreover that although each rod 16 can be provided monolithically, preferably it is constituted by two or more telescopic elements, as in the accompanying figures, ensuring the possibility to vary the distance between the means 6 and the barrier 5.

The operation of the rake unit according to the invention is as follows.

As already shown, the unit 1 can be moved by a respective drive unit along an agricultural field, on which agricultural products (grass or others) previously cut (by a mower, for example) are distributed randomly and indiscriminately.

By advancing progressively along the ground, the unit 1 picks up from the ground the agricultural products (by virtue of the first teeth 7) and delivers them to the belt 4, which deposits them on the ground at one or both sides of the unit 1, thus forming the swath, or transfers them to an adjacent belt 4.

The auxiliary means 6 provide a further thrust on the grass, indeed at the border region C, i.e., the particularly critical area between the elements 3 and the belt 4, in which known solutions show their limitations, since often the agricultural products stop or proceed with difficulty, causing the forming of an irregular swath.

Instead by virtue of the auxiliary means 6, which can move cyclically and act indeed on the border region C, it is possible to obtain swaths having a regular shape, reducing or eliminating the presence of unwanted accumulations on the ground, as well as of tangles and clogging, since indeed the grass is pushed toward the belts 4 not only by the first teeth 7 but also by the second teeth 8.

As noted several times, the means 6 are kinematically and morphologically similar to the elements 3: this allows to reduce the number of components to be managed in inventory, at the same time providing useful economies and scales and therefore more generally ensuring further benefits.

The particular trajectories given to the second teeth 8, ensured by the second mechanism described in the preceding pages, further ensure an effective treatment of the agricultural products, which are neither damaged nor slowed down during their movement.

Finally, it is useful to repeat once again that the position and the inclination of the means 6 with respect to the elements 3 and the belt 4 can be adjusted in various manners, in a fully practical and easy way, optimizing the step of release of the agricultural products and more generally meeting the various requirements that the specific contexts (and the specific types/conditions of the agricultural products) cause to arise in each instance.

The invention thus conceived is susceptible of numerous modifications and variations, all of which are within the scope of the appended claims; all the details may further be replaced with other technically equivalent elements.

In the examplary embodiments shown, individual characteristics, given in relation to specific examples, may actually be interchanged with other different characteristics that exist in other examplary embodiments.

In practice, the materials used, as well as the dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A rake unit, for the movement and conveyance of agricultural products such as grass, hay, forage, wheat, corn and the like, cut and spread on the ground, comprising a framework (2) which can be coupled to a drive unit, for its movement along an advancement direction (A), said framework (2) being associated with elements (3) which can move cyclically for lifting and delivering the agricultural products to at least one conveyor belt (4), which faces and is proximate to said elements (3), for the movement of the agricultural products along an operating direction (B) that is defined by said belt (4) and for their conveyance in a corresponding discharge area, **characterized in that** it comprises cyclically movable auxiliary means (6) for the movement of the agricultural products, chosen of the type of said elements (3), which are associated with said framework (2), and in at least part of their cyclic movement face in an upper region and are proximate to the border region (C) between said elements (3) and said at least one belt (4), in order to facilitate the delivery of the agricultural products to said at least one belt (4).

2. The rake unit according to claim 1, **characterized in that** said elements (3) comprise at least one row of first teeth (7), which rotate along respective first closed trajectories, which are wound around a common first working axis (D), which is parallel to said operating direction (B), said means (6) comprising at least one row of second teeth (8), of the type of said first teeth (7), which rotate along respective second closed trajectories, which are wound around a common second working axis (E), which is parallel to said working direction (B) and to said first axis (D).

3. The rake unit according to claim 2, **characterized in that** said elements (3) and/or said means (6) comprise a plurality of said mutually parallel rows of said teeth (7, 8).

4. The rake unit according to one or more of the preceding claims, **characterized in that** each one of said teeth (7, 8) is constituted by an at least partially flexible wire.

5. The rake unit according to one or more of the preceding claims, **characterized in that** it comprises a first mechanism for the movement of said at least one row of said first teeth (7) and a second mechanism for the movement of said at least one row of said second teeth (8) along the respective said trajectories, each one of said mechanisms comprising at least one rotating shaft (9), which is arranged along the respective said working axis (D, E) and is controlled by a motor, optionally common to said mechanisms, at least one respective supporting bar (10) for a corresponding said row of teeth (7, 8) being coupled to each one of said shafts (9).

6. The rake unit according to claim 5, **characterized in that** at least one of said supporting bars (10) is supported rotatably by an arm (11) which is mounted so as to be integral on the respective said shaft (9), for the possibility of rotation about its own longitudinal axis, said at least one bar (10) being even indirectly coupled to a roller (12) which can slide along the profile of a contoured cam (13), the combination of the motions imparted by said shaft (9) and by said cam (13) defining the respective said trajectory.

7. The rake unit according to claim 6, **characterized in that** each one of said wires is wound with an end portion thereof around a supporting foot (10a), which is fixed rigidly to the respective said bar (10).

8. The rake unit according to one or more of claims 2-7, **characterized in that** a spacer strap (15) is interposed between each pair of said adjacent teeth (7, 8), and is partially wound around the respective said working axis (D, E), said trajectories of said teeth (7, 8) crossing the gaps between respective said adjacent straps (15).

9. The rake unit according to claim 8, **characterized in that** each one of said second trajectories comprises at least one first portion, which is directed toward said elements (3), in which the corresponding said second tooth (8) protrudes from the profile of said straps (15), in order to engage and move the agricultural products, and at least one second portion, arranged downstream of said first portion with respect to the orientation of travel of said second trajectories, in which the corresponding said second tooth (8) is retracted into the profile of said straps (15), in the transition from said first portion to said second portion each one of said second teeth (8) retracting progressively within said profile of said straps (15), remaining substantially perpendicular to said profile.

10. The rake unit according to one or more of claims 5-9, **characterized in that** it comprises a supporting frame for said means (6), which is associated even indirectly with said framework (2), said frame comprising a pair of rods (16) which are coupled to a shell (17) for the rotatable support of the respective said shaft (9).

11. The rake unit according to claim 10, **characterized in that** each one of said rods (16) can be coupled rigidly to a component of said framework (2) according to one selectively of a plurality of different orientations, which correspond to different vertical heights of said means (6), with respect to said belt (4) and said elements (3).

12. The rake unit according to claim 10 or 11, **characterized in that** said shell (17) can be coupled rigidly to each one of said rods (16) according to one selectively of a plurality of different orientations, which correspond to different inclinations of said means (6), with respect to said belt (4) and to said elements (3).
